(19) Europäisches Patentamt
European Patent Office
Office européen des brevets

(11) **EP 1 453 004 A2**

(12) **EUROPEAN PATENT APPLICATION**

(43) Date of publication:
**01.09.2004 Bulletin 2004/36**

(51) Int Cl.7: **G06T 9/00**

(21) Application number: **04004368.9**

(22) Date of filing: **26.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **28.02.2003 JP 2003054618**
**27.03.2003 JP 2003087659**

(71) Applicant: **NTT DoCoMo, Inc.**
**Tokyo 100-6150 (JP)**

(72) Inventors:
• **Sugimoto, Kazuo, c/o Intellectual Property Dept.**
**Chiyoda-ku Tokyo 100-6150 (JP)**

• **Moschetti, Fulvio, c/o Intellectual Property Dept.**
**Chiyoda-ku Tokyo 100-6150 (JP)**
• **Kobayashi, Mitsuru,**
**c/o Intellectual Property Dept**
**Chiyoda-ku Tokyo 100-6150 (JP)**
• **Kato, Sadaatsu, c/o Intellectual Property Dept.**
**Chiyoda-ku Tokyo 100-6150 (JP)**

(74) Representative:
**GROSSE BOCKHORNI SCHUMACHER**
**Patent- und Rechtsanwälte**
**Forstenrieder Allee 59**
**81476 München (DE)**

(54) **Image encoding apparatus and method**

(57)    In a video encoding apparatus 1, the conversion unit 8 decomposes a coding target image by a Matching Pursuits (MP) method using a basis set based on a two-dimensional function which is made by giving parameters for curving a predetermined two-dimensional pattern to a generating function for generating such two-dimensional pattern. According to such configuration, it becomes possible to decompose a coding target image by a small number of repetitive operations on the basis of the MP method. As a result, a coding target image can be decomposed into a small number of atom information, and thereby it becomes possible to generate compression data with a low bit rate.

**Fig.1**

VIDEO ENCODING APPARATUS

**Description**

BACKGROUND OF THE INVENTION

Field of the Invention

The present invention relates to an image encoding apparatus, an image encoding method, an image encoding program, an image decoding apparatus, an image decoding method, and an image decoding program.

Related Background of the Invention

In an image encoding apparatus for generating compression data made by encoding a coding target image, a processing of decomposing the coding target image by using a plurality of bases is executed. As a kind of such an image encoding apparatus, a video encoding apparatus for executing a processing of decomposing a prediction residual image of a coding target frame as an coding target image by using a Matching Pursuits method (hereinafter, referred to as an "MP method" in this specification) is known (for example, see Neff R. and Zakhor A., "Very Low Bit-Rate Coding Based on Matching Pursuit," IEEE Trans. Circuits Syst. Video Technol., vol. 7, no. 1, pp. 158-171, February). The MP method repeats the processing, which defines the coding target image as an initial residual component and decomposes the residual component by using a basis set, by using the following formula (1). Here, in the formula (1), f denotes the coding target image, $R_nf$ does a residual component after the n-th repetitive operation, $g_{kn}$ does a basis which maximizes an inner product value with $R_nf$, and $R_mf$ does a residual component after the m-th repetitive operation. That is, according to the MP method, the basis which maximizes an inner product value with a residual component is selected from a basis set, and the residual component is decomposed into the selected basis and a largest inner product value which is a coefficient for multiplication with this basis.

$$f = \sum_{n=0}^{m-1} \left\langle R_n f, g_{kn} \right\rangle g_{kn} + R_m f \quad \cdots (1)$$

The above-described video encoding apparatus decomposes the predictive residual image by the MP method by using a over-complete basis set previously prepared on the basis of a two-dimensional Gabor function.

SUMMARY OF THE INVENTION

However, a basis set generated on the basis of a two-dimensional Gabor function includes only bases for generating a two-dimensional pattern which is symmetric about an original point. Accordingly, it is necessary to execute many repetitive operations in order to decompose a predictive residual image generally including an non-isotropic pattern such as a curved pattern or the like by using this basis set. As a result, in the video encoding apparatus, the bit rate of compression data generated by using a code made by decomposing a coding target frame increases.

The present invention has been developed in order to solve the above problem, and aims to provide an image encoding apparatus, image encoding method, and image encoding program for encoding a coding target image to compression data with a low bit rate, and provide an image decoding apparatus, image decoding method, and image decoding program for decoding such compression data.

In order to solve the above problem, the image encoding apparatus of the present invention comprises: dictionary storage means for storing a plurality of bases based on a predetermined two-dimensional function for generating a predetermined two-dimensional pattern, the predetermined two-dimensional function including parameters for curving the predetermined two-dimensional pattern; conversion means for decomposing a coding target image by using the plurality of bases on the basis of a predetermined conversion rule, and converting the coding target image into basis information including index information to a basis used for decomposing the coding target image, a coefficient by which the basis specified by the index information is multiplied, and positional information for specifying a position where a pattern made by multiplying the basis specified by the index information by the coefficient is restored; and encoding means for generating compression data including a compression code made by encoding the basis information on the basis of a predetermined compression coding rule.

Furthermore, in order to solve the above problem, the image encoding method of the present invention includes: a conversion step in which conversion means decomposes a coding target image on the basis of a predetermined conversion rule by using a plurality of bases stored in dictionary storing means and converts the coding target image into basis information including index information to a basis used for decomposing the coding target image, a coefficient by which the basis specified by the index information is multiplied, and positional information for specifying a position where a pattern made by multiplying the basis specified by the index information by the coefficient is restored, wherein the plurality of bases are based on a predetermined two-dimensional function for generating a predetermined two-dimensional pattern, and the predetermined two-dimensional function includes parameters for curving the predetermined two-dimensional pattern; and an encoding step in which encoding means generates compression data including a compression code made by encoding the basis information on the basis of a predetermined compression coding rule.

According to the present invention, the plurality of bases stored in the dictionary storage means include bases for generating a pattern made by curving a predetermined two-dimensional pattern, so that it becomes possible to decompose a coding target image by a small number of repetitive operations on the basis of a predetermined conversion rule i.e. the MP method using such plurality of bases. As a result, a coding target image can be decomposed into a small number of basis information, and thereby it becomes possible to generate compression data with a low bit rate.

Furthermore, in order to solve the above problem, the image encoding program of the present invention allows a computer to function as: dictionary storage means for storing a plurality of bases based on a predetermined two-dimensional function for generating a predetermined two-dimensional pattern, the predetermined two-dimensional function including parameters for curving the predetermined two-dimensional pattern; conversion means for decomposing a coding target image by using the plurality of bases on the basis of a predetermined conversion rule, and converting the coding target image into basis information including index information to a basis used for decomposing the coding target image, a coefficient by which the basis specified by the index information is multiplied, and positional information for specifying a position where a pattern made by multiplying the basis specified by the index information by the coefficient is restored; and encoding means for generating compression data including a compression code made by encoding the basis information on the basis of a predetermined compression coding rule.

By allowing a computer to execute such the image encoding program, the computer functions as the dictionary storage means, the conversion means, and the coding means, so that it becomes possible to decompose a coding target image by a small number of repetitive operations on the basis of a predetermined conversion rule, i.e. an MP method, using a plurality of bases, such as a pattern made by curving a predetermined two-dimensional pattern. As a result, a coding target image can be decomposed into a small number of basis information, and thereby it becomes possible to generate compression data with a low bit rate.

In addition, in the present invention, the predetermined two-dimensional function further includes parameters for making the predetermined two-dimensional pattern move, rotate, and expand and shrink in two directions.

According to this invention, the predetermined two-dimensional function includes parameters for making a predetermined two-dimensional pattern move, rotate, and expand and shrink in two directions. Accordingly, the number of repetitive operations for decomposing a coding target image by the MP method can be further reduced by using a plurality of bases based on such the predetermined two-dimensional function. As a result, it becomes possible to further reduce the bit rate of compression data.

Furthermore, in the present invention, the encoding means incorporates the parameters of each of the plurality of bases stored in the dictionary storage means in the compression data.

According to this invention, the compression data includes parameters for generating each of the plurality of bases. Accordingly, without previously making image decoding apparatuses store the plurality of bases in common, the same plurality of bases as the plurality of bases used for generating the compression data can be stored on the basis of such parameter in image decoding apparatuses which know the predetermined two-dimensional function.

Furthermore, another aspect of the present invention relates to an image decoding apparatus for decoding compression data made by the image encoding apparatus or a computer operated by the image encoding program of the present invention. The image decoding apparatus comprises: dictionary storage means for storing a plurality of bases based on a predetermined two-dimensional function for generating a predetermined two-dimensional pattern, the predetermined two-dimensional function including parameters for curving the predetermined two-dimensional pattern; decoding means for decoding compression data and generating a basis information, the compression data including a compression code made by encoding the basis information including index information to a basis used for restoring a decoding target image, a coefficient by which the basis specified by the index information is multiplied, and positional information for specifying a position where a pattern made by multiplying the basis specified by the index information by the coefficient is restored; and inverse conversion means for generating the decoding target image by applying a predetermined inverse conversion rule to the basis information decoded by the decoding means.

Furthermore, the image decoding method of the present invention includes: a decoding step in which decoding means decodes compression data including a compression code made by encoding basis information including index information to a basis used for restoring a decoding target image on the basis of a predetermined inverse conversion rule among a plurality of items of index information to a plurality of bases stored in dictionary storage means, a coefficient by which the basis specified by the index information is multiplied, and positional information for specifying a position where a pattern made by multiplying the basis specified by the index information by the coefficient is restored, wherein the plurality of bases are based on a predetermined two-dimensional function which generates a predetermined two-dimensional pattern and includes parameters for curving the two-dimensional pattern; and an inverse conversion step in which inverse conversion means generates the image for decoding by applying a predetermined inverse conversion rule to the basis information decoded by the decoding means.

According to the present inventions, a decoding target image can be restored by applying a predetermined inverse conversion rule using the plurality of bases stored in the dictionary storage means, i.e. processing that is the reverse of the conversion processing based on the MP method, to the basis information decoded from a compression code included in compression data. Note that the same plurality of bases as ones provided in the image encoding apparatus in order to generate the compression data may be stored in the dictionary storage means.

Furthermore, the image decoding program of the present invention allows a computer to function as: dictionary storage means for storing a plurality of bases based on a predetermined two-dimensional function for generating a predetermined two-dimensional pattern, the predetermined two-dimensional function including parameters for curving the predetermined two-dimensional pattern; decoding means for decoding compression data and generating a basis information, the compression data including a compression code made by encoding the basis information including index information to a basis used for restoring a decoding target image, a coefficient by which the basis specified by the index information is multiplied, and positional information for specifying a position where a pattern made by multiplying the basis specified by the index information by the coefficient is restored; and inverse conversion means for generating the decoding target image by applying a predetermined inverse conversion rule to the basis information decoded by the decoding means.

Such image decoding program is capable of allowing a computer to function as the dictionary storage means, the decoding means, and the inverse conversion means, and thereby restoring an coding target image by using compression data generated by the image encoding apparatus.

Furthermore, in the present invention, the predetermined two-dimensional function further includes parameters for making the predetermined two-dimensional pattern move, rotate, and expand and shrink in two directions.

Furthermore, in the present invention, the decoding means makes the dictionary storing means store the plurality of bases on the basis of parameters for generating each of the plurality of bases included in the compression data.

According to such the invention, the compression data includes parameters of each of the plurality of bases stored in the dictionary storage means of the image encoding apparatus. Accordingly, without previously storing, in the image decoding apparatus, the plurality of bases common to the plurality of bases stored in the dictionary storage means of the image encoding apparatus, the image decoding apparatus is able to generate, if the predetermined two-dimensional function is known, a plurality of bases to be stored in the dictionary storage means, by applying the parameters to the predetermined two-dimensional function.

The present invention will be more fully understood from the detailed description given hereinbelow and the attached drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

## BRIEF DESCRIPTION OF THE DRAWINGS

In the course of the following detailed description, reference will be made to the attached drawings in which:

Fig. 1 is a block diagram showing the functional configuration of a video encoding apparatus according to an embodiment;

Fig. 2 is a diagram showing an example of correspondence relation between coding values of atom flags and binary values;

Fig. 3 is a diagram showing an example of initial values on a probability table used for the arithmetic coding of an atom flag;

Fig. 4 is a diagram showing another example of initial values on the probability table used for the arithmetic coding of an atom flag;

Fig. 5 is a diagram showing an example of correspondence relation between coding values of an atom number and binary values;

Fig. 6 is a diagram showing an example of initial values of a probability table for the arithmetic coding of an atom number, and shows an example of initial values of the probability table used for the arithmetic coding. of a BIN number 0 of a binary value corresponding to the atom number;

Fig. 7A is a diagram showing an example of correspondence relation between intra-block positional information and binary values in the case of a block size of 4 x 4;

Fig. 7B is a diagram showing an example of correspondence relation between intra-block positional information and binary values in the case of a block size of 8 x 8;

Fig. 7C is a diagram showing an example of correspondence relation between intra-block positional information and binary values in the case of a block size of 16 x 16;

Fig. 8 is a diagram showing an example of correspondence relation between index information and binary values;

Fig. 9 is a diagram showing an example of correspondence relation between positive or negative signs and binary values;

Fig. 10 is a diagram showing an example of correspondence relation between differential quantized coefficients and binary values;

Fig. 11 is a flow chart showing a video encoding method according to an embodiment;

Fig. 12 is a flow chart showing a video encoding method according to an embodiment, and shows the coding processing of atom information in a block in this video encoding method;

Fig. 13 is a block diagram showing the functional configuration of a video decoding apparatus according to an embodiment;

Fig. 14 is a flow chart of a video decoding method according to an embodiment;

Fig. 15 is a diagram showing the configuration of a video encoding program according to an embodiment; and

Fig. 16 is a diagram showing the configuration of a video decoding program according to an embodiment.

## DESCRIPTION OF THE PREFERRED EMBODIMENTS

A video encoding apparatus 1 according to an embodiment of the present invention will be explained. The video encoding apparatus 1 is a computer, physically, provided with a CPU (central processing unit), a memory device, and a storage device such as a hard disk, and the like. The "computer" here also includes an information personal digital assistant such as a mobile communication terminal in addition to a normal computer such as a personal computer, and the idea of the present invention is widely applied to apparatuses which can process information.

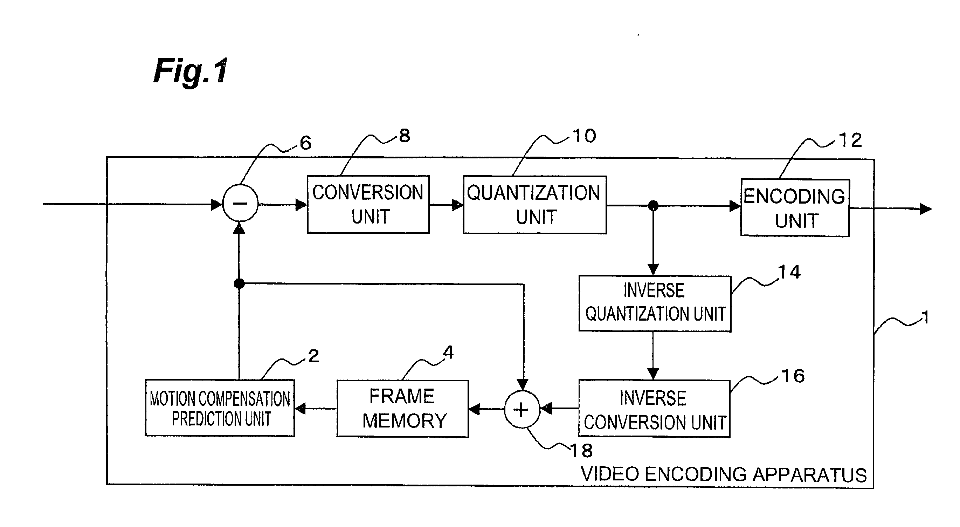

Next, the functional configuration of the video encoding apparatus 1 will be explained. Fig. 1 is a block diagram showing the functional configuration of the video encoding apparatus 1. As shown in Fig. 1, the video encoding apparatus 1 comprises a motion compensation prediction unit (motion compensation prediction means) 2, frame memory 4, a subtraction unit (subtraction means) 6, a conversion unit (conversion means, dictionary storage means) 8, a quantization unit 10, an encoding unit (coding means) 12, an inverse quantization unit 14, an inverse conversion unit 16, and an addition unit 18. Hereafter, each component will be explained in detail.

The motion compensation prediction unit 2 performs motion compensation for a coding target frame by using a reference frame stored in the frame memory 4, and generates a predicted image of the coding target frame.

More specifically, the motion compensation prediction unit 2 divides a coding target frame into a plurality of blocks with a predetermined size. This predetermined size can be made into the size of 16 pixels x 16 lines. The motion compensation prediction unit 2 performs the block matching of each of the blocks and a reference area which is a predetermined area in reference frames stored in the frame memory 4 and detects a motion vector of each of the plurality of blocks to the reference frame. The motion compensation prediction unit 2 generates a predicted image of the coding target frame from the reference frame by using this motion vector.

Note that, an image in a reference area which is generated from a reference frame is not limited to an image constituted by only integer pixels, but an image, where interpolation pixels which interpolate a half position or a quarter position between integer pixels are provided, may be acceptable. By providing interpolation pixels in this manner, detection of a motion vector in high accuracy is made possible.

The subtraction unit 6 executes differential operation between a predicted image generated by the motion compensation prediction unit 2 and the coding target frame to generate a prediction residual image which consists of residuals between the predicted image and the coding target frame.

The conversion unit 8 decomposes a prediction residual image by the MP method shown in the formula (1). The conversion unit 8 stores a basis set used in order to execute the MP method. Each basis included in the basis set is based on a predetermined two-dimensional function.

As the predetermined two-dimensional function, for example, a two-dimensional function on the basis of a generating function shown in the following formula (2) can be used.

$$(4x'^2 -2)e^{-(x'2+y2)} \qquad (2)$$

In addition, the predetermined two-dimensional function includes parameters variously deforming a two-dimension pattern generated by the generating function.

As these parameters, it is possible to use a motion parameter for moving a two-dimensional pattern generated by formula (2), a rotation parameter for rotating it, a scaling parameter for expanding and shrinking it independently in the two directions of X and Y directions, and a curve parameter for curving the two-dimensional pattern.

Here, in order to curve the two-dimensional pattern, it is possible to substitute x' according to the following formula (3) in formula (2) to use K and $\alpha$ of the following formula (3) as curve parameters. For example, by giving 2 as $\alpha$, it is possible to obtain an arch-like two-dimensional pattern by curving a two-dimensional pattern generated by the generating function of the formula (2). In addition, by giving a positive or negative numerical value to K, it is possible to change the direction of an arch-like two-dimensional pattern.

$$x'=x+Ky^{\alpha} \qquad (3)$$

The conversion unit 8 converts the prediction residual image into a set of atom information including a basis chosen from the basis set, a coefficient by which the basis is multiplied, and positional information for specifying a position where a pattern made by multiplying the basis by the coefficient is restored, according to the above-mentioned formula (1) by using the basis set obtained by adjusting the above-described parameters.

The coefficient included in atom information is subjected to quantizing operation by the quantization unit 10, and a quantized coefficient is included in the atom information instead of the coefficient.

The encoding unit 12 encodes a motion vector generated by the motion compensation prediction unit 2 by entropy coding processing to generate a compression code.

In addition, the encoding unit 12 encodes atom information in which the coefficient included in it has been quantized coefficient by the quantization unit 10 to generate a compression code. The encoding unit 12 generates compression data containing these compression codes.

Hereafter, the encoding processing of atom information will be explained in detail. In the encoding processing, the encoding unit 12 first obtains a quantized coefficient whose absolute value is at a minimum among quantized coefficients included in a plurality of items of atom information generated by decomposing a coding target frame, and stores it as the minimum absolute value of the quantized coefficient in the coding target frame. This minimum absolute value is included in compression data by being included in a frame header of each coding target frame.

Next, the encoding unit 12 divides the coding target frame into a plurality of blocks, and performs the encoding processing of the atom information in each blocks. The encoding processing of the atom information to the coding target frame is performed by changing the size of a block. As the size of a block, it is possible, for example, to use three sorts of size: 4 x 4, 8 x 8 and 16 x 16 and, in this case, encoding processing of atom information is repeated three times. Here, the size of a block and the number of times that the size of a block is changed are not limited to the example.

In each of the plurality of blocks into which a coding target frame has been divided, the encoding unit 12 obtains an atom flag specifying the existence of atom information having positional information, the position being included in the block.

In addition, when the atom information is included in the block, it obtains the number of items of the atom information (hereafter, the number of items of the atom information is referred as "atom number").

Then, the encoding unit 12 performs the arithmetic coding of the atom flags and the atom numbers, and includes them in a compression code. This arithmetic coding processing will be described later.

Next, for each of the plurality of blocks, the encoding unit 12 arranges the items of atom information included in the block in the descending order of their absolute values.

Then, the encoding unit 12 makes the positional information into intra-block positional information converted into relative positional information in the block where the positional information is included, and performs the arithmetic coding of this intra-block positional information and index information in the arrangement order to include them in the compression code.

In addition, the encoding unit 12 performs arithmetic coding of the quantized coefficients after converting the quantized coefficients into a differential quantized coefficient being a differential value between its absolute value and the minimum absolute value, and includes them in the compression code. Here, in the processing of performing arithmetic coding of the differential quantized coefficient in the arrangement order, in each block, the coding of the differential quantized coefficient is stopped when the differential quantized coefficient of "0" appears.

Furthermore, the encoding unit 12 performs arithmetic coding of a positive or negative sign specifying the positive or negative of each quantized coefficient to include it in the compression code.

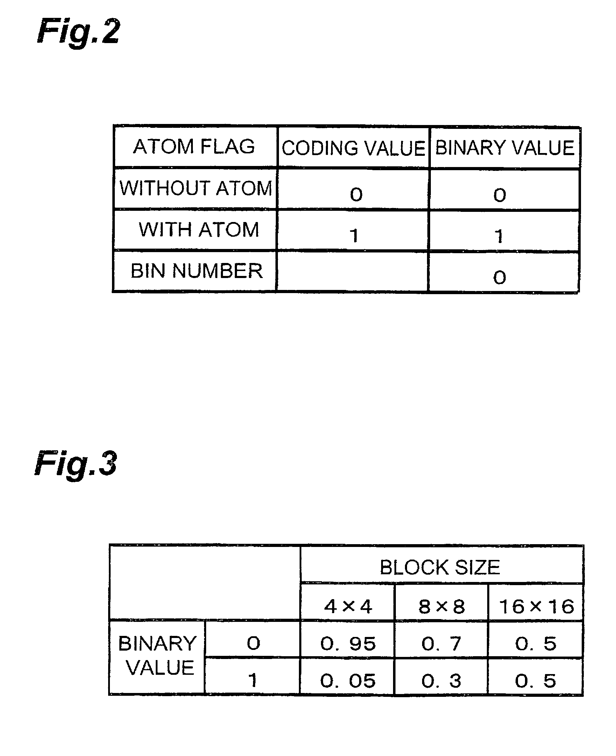

Hereafter, the arithmetic coding processing of the atom information performed by the encoding unit 12 mentioned above will be explained in detail. First, each of the atom flags specifying the existence of the atom in the blocks is converted into a binary value by using correspondence relation between coding values of atom flags and binary values that is shown in Fig. 2.

The atom flag that has been made into a binary value is arithmetic-coded by using a probability table on which an initial value differs for every size of a block. A probability table as shown in Fig. 3 may be used as this probability table.

Fig. 3 shows an example of the initial value in the probability table that is used for the arithmetic coding of an atom flag, and the initial value on the probability table differs according to the size of a block. This is because the smaller the size of a block is, the smaller a probability that each block has the atom information in it is and, on the contrary, the larger the size of a block is, the larger a probability that each block has the atom information in it is. Since arithmetic coding is to assign a code in a section on a number line by using a probability table, a probability table of differing according to a block size as shown in Fig. 3 is preferably used so that a large section may be assigned to a binary value with a high frequency in the coding of an atom flag.

A probability table used for the arithmetic coding of the atom flag is updated in accordance with frequency of binary values in the past so that a section on a number line may be largely assigned to a binary value with a high frequency.

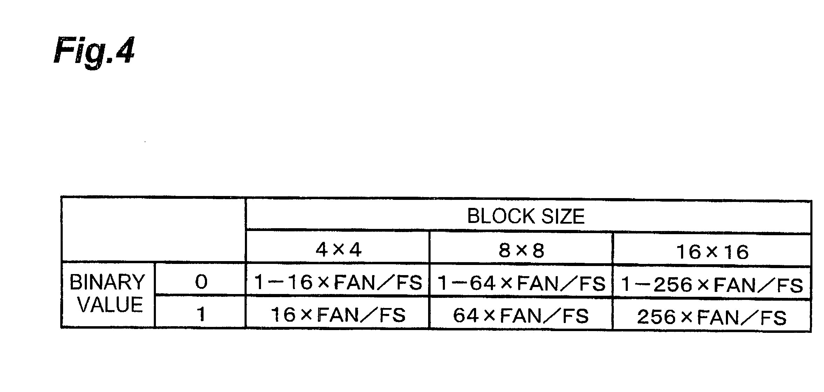

Note that, a probability table shown in Fig. 4 is also applicable as a probability table used for the arithmetic coding of the atom flag. In Fig.4, "FAN" denotes an atom number in a frame, and "FS" does a number of pixels of the frame. When the probability table shown in Fig. 4 is used, the same advantageous effects as the advantageous effects by the probability table shown in Fig. 3 are acquired in regard to the arithmetic coding of the atom flag.

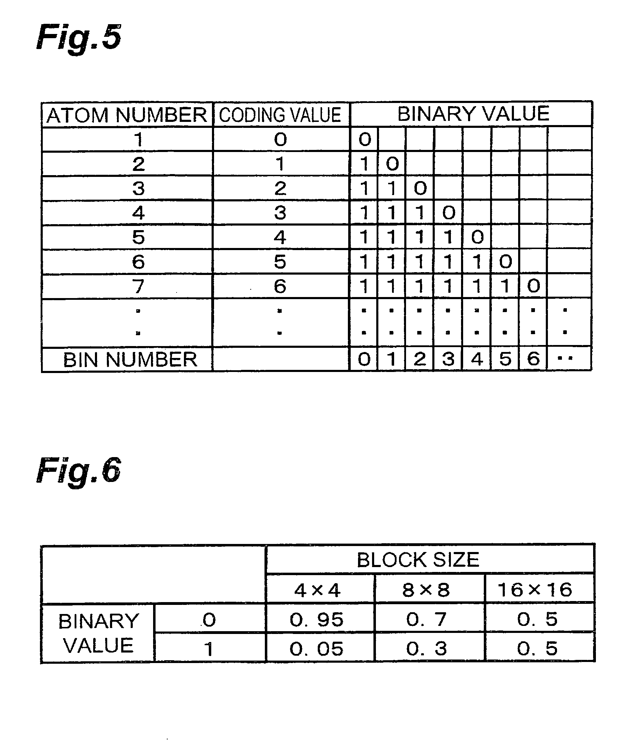

The atom number in each of the blocks is converted into a series of binary values by using correspondence relation between a coding value of the atom number and the binary value that is shown in Fig. 5.

Then, each of binary values included in the series corresponding to atoms number is arithmetic-coded on the basis of a probability table prepared for each BIN number (a BIN number denotes a bit number of the binary value.).

Fig. 6 is a diagram showing an example of a probability table that is used for the arithmetic coding of the atom number, and shows an example of the initial value on the probability table of a BIN number 0. In regard to the atom number also, since frequency of binary values differs for every BIN number according to the size of a block, the initial value on the probability table is set up so that a binary value with a high frequency may be assigned to a large section on a number line. This probability table is updated in accordance with the frequency of binary values for every BIN number in the past.

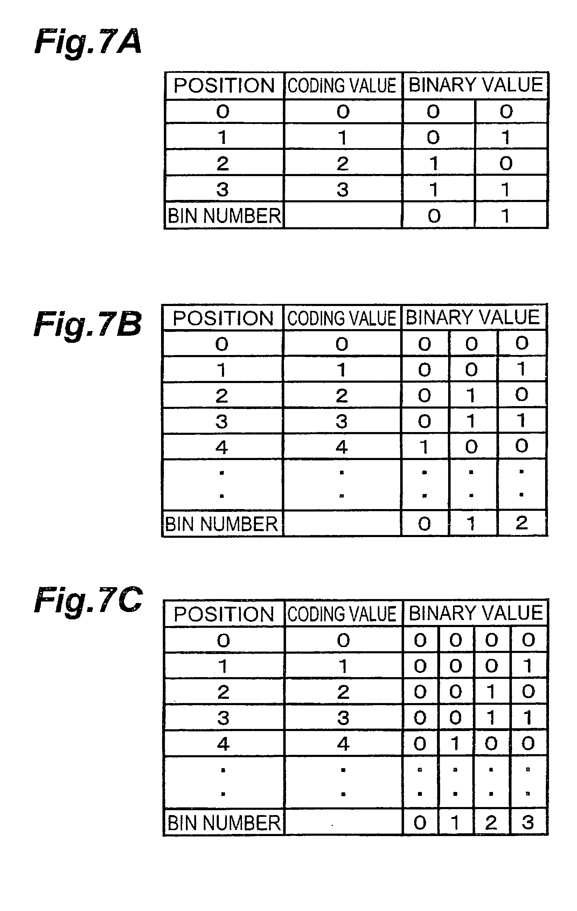

After being changed into a series of binary values with being divided in the horizontal axis and vertical axis respectively, intra-block positional information is arithmetic-coded. Fig. 7A, Fig. 7B and Fig. 7C are diagrams showing examples of correspondence relation between intra-block positional information and binary values respectively, and show the correspondence relation between the intra-block positional information and binary values in the case of block size of 4 x 4, 8 x 8 and 16 x 16, respectively.

The intra-block positional information is converted into a series of binary values by using the above-described correspondence relation in correspondence with a block size. The series of binary values into which the intra-block positional information has been converted is arithmetic-coded for every BIN number. As the probability table used for this arithmetic coding, a probability table where a section of 0.5 is assigned on a number line for both of "0" and "1" may be used.

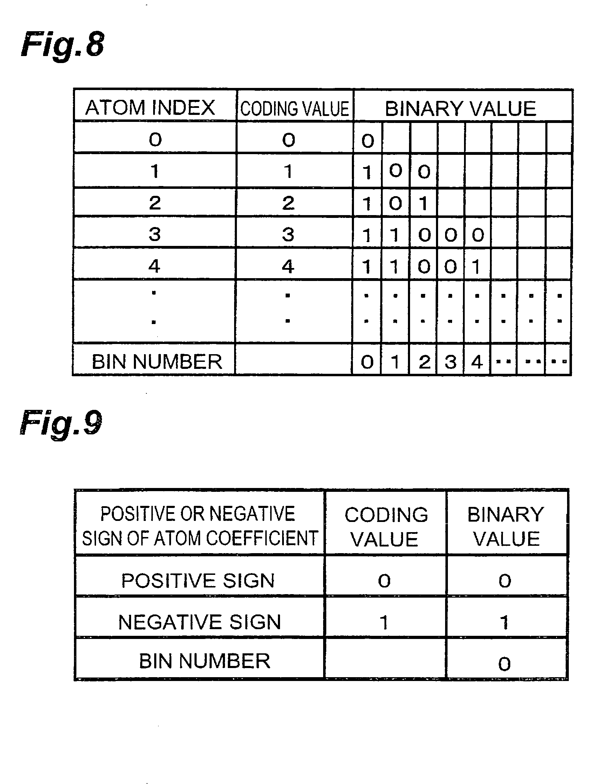

Similarly, index information is also converted into the column of binary values according to a rule shown in an example of the correspondence relation between index information and binary values that is shown in Fig. 8. In Fig. 8, index information is referred as "atom index". The series of binary values into which the index information has been converted is arithmetic-coded for every BIN number. As the probability table used for this arithmetic coding, a probability table where a section of 0.5 is assigned on a number line for both of "0" and "1" may be used. This probability table is updated in accordance with the frequency of binary values for every BIN number in the past frame.

A positive or negative sign of a quantized coefficient is converted into a binary value according to a rule shown in an example of the correspondence relation between positive and negative signs and binary values that is shown in Fig. 9. The binary value into which a positive or negative sign has been converted is arithmetic-coded by using a probability table where a section of 0.5 is assigned on a number line for both of "0" and "1", as the probability table.

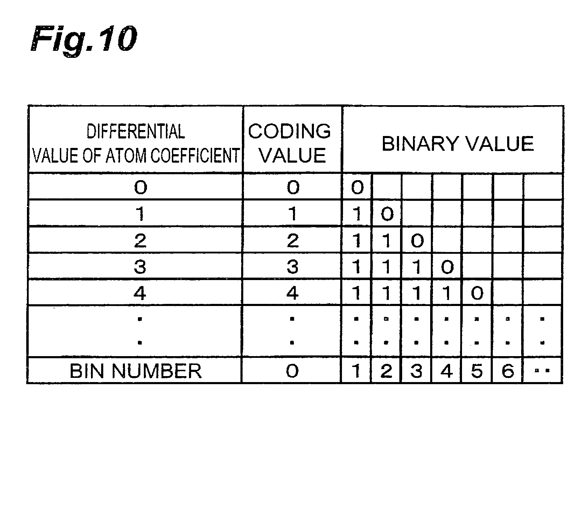

The differential quantized coefficient is converted into a series of binary values according to a rule shown in an example of the correspondence relation between differential quantized coefficients and binary values that is shown in Fig. 10. The column of binary values into which the differential quantized coefficient has been converted is arithmetic-coded for every BIN number. As the probability table used for this arithmetic coding, a probability table where a section of 0.5 is assigned on a number line for both of "0" and "1" may be used. This probability table is updated in accordance with the frequency of binary values for every BIN number in the past frame.

Returning to Fig. 1, the encoding unit 12 performs the above encoding processing of the atom information while changing the size of a block, whereby generating a plurality of compression codes. The encoding unit 12 adopts the compression code of which bit rate is at a minimum among the plurality of compression codes to include it into the compressed data, and includes the block size used for the generation of this compression code into the frame header.

When the block size into which a coding target frame is divided is made small, an amount of codes of intra-block positional information can be made small, however, an amount of codes of atom flags and atom numbers increases. Conversely, the amount of codes of atom flags and atom numbers can be made small when the size of a block is made large, but the amount of codes of the intra-block positional information increases. According to the encoding processing mentioned above, since the compression code obtained by using an optimal block size for every coding target frame is included in the compression data, the bit rate of compression data can be reduced.

The inverse quantization unit 14, inverse conversion unit 16 and addition unit 18 are portions which perform processing for storing a reference frame in the frame memory 4. The inverse quantization unit 14 performs inverse quantization of the quantized coefficient included in the atom information. The inverse conversion unit 16 performs an inverse conversion processing of the conversion processing performed by the conversion unit 8 to the atom information, and restores the prediction residual image. The addition unit 18 adds the predicted image of the reference frame and the prediction residual image restored by the inverse conversion unit 16, and generates a reference frame. This reference frame is stored in the frame memory 4 as mentioned above, and this reference frame is used for the processing which generates a predicted image of a coding target frame by the motion compensation prediction unit 2.

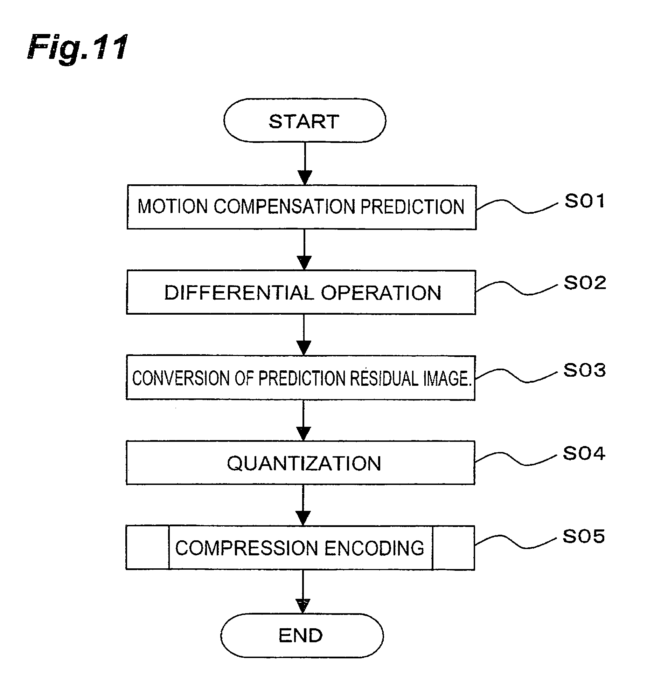

Hereafter, the operation of the video encoding apparatus 1 will be explained, and in addition, a video encoding method according to an embodiment will be explained. Fig. 11 is a flow chart of such a video encoding method.

As shown in Fig. 11, in the video encoding apparatus 1, motion compensation prediction is performed by the motion compensation prediction unit 2 (Step S01). In the motion compensation prediction, a coding target frame is divided into the plurality of blocks with predetermined size. Then, a motion vector to the reference frame is obtained by the motion compensation prediction unit 2 for each block, and a predicted image of the coding target frame is generated. Here, a frame having been coded previously can be used as the reference frame. That is, an image, which is generated by adding, with the addition unit 18, a prediction residual image generated by inverse quantization with the inverse quantization unit 14 and inverse conversion with the inverse conversion unit 16 for the frame previously coded and a predictive image of the frame, and stored in the frame memory 4, is used as the reference frame.

Next, the differential operation of the coding target frame and the predicted image is performed by the subtraction unit 6, and a prediction residual image is generated (Step S02).

The prediction residual image is converted into the atom information by processing on the basis of the above-mentioned MP method by the conversion unit 8 (Step S03).

Next, the coefficient included in the atom information is quantized by the quantization unit 10 to be converted into the quantized coefficient (Step S04). Then, the above-mentioned motion vector and the atom information are coded by the encoding unit 12 (Step S05).

In the step S05, the encoding unit 12 extracts a coefficient whose absolute value is at a minimum as the minimum absolute value among coefficients included in the atom information in the coding target frame. This minimum absolute value is included in the frame header. Next, the encoding unit 12 divides the coding target frame into a plurality of blocks.

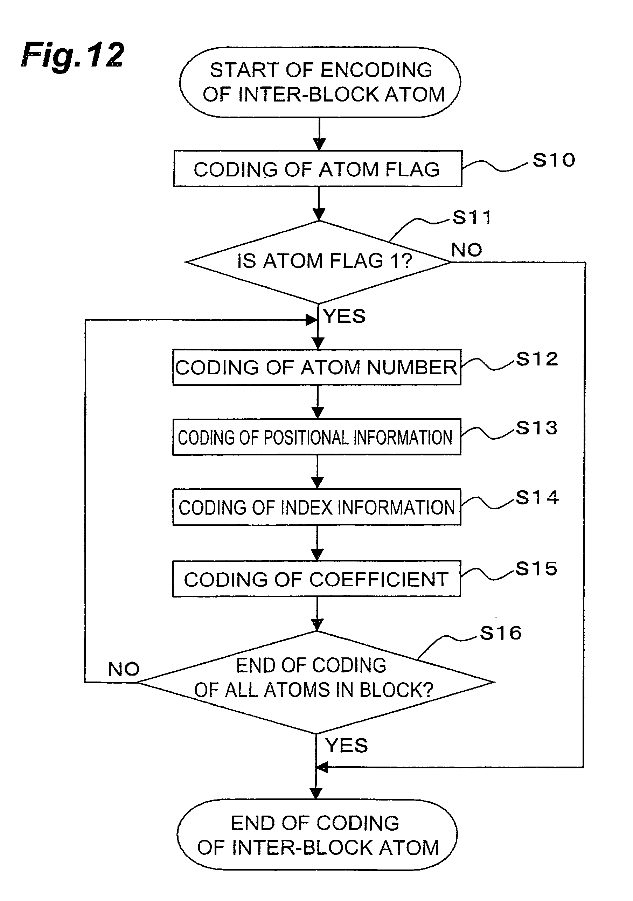

The encoding unit 12 performs encoding processing of the atom information shown in a flow chart in Fig. 12 for each block. First, for each of the plurality of blocks, the encoding unit 12 obtains an atom flag which specifies the existence of the atom information where a position is included in the block, and performs arithmetic coding of this atom flag as mentioned above (Step S10).

Next, the encoding unit 12 judges whether atom information is included in the block, that is, whether an atom flag is 1 (Step S11). When the atom flag is not 1, atom information does not exist in the block, and hence, the encoding processing of the atom information regarding the block is ended. On the other hand, when the atom flag is 1, i.e., when atom information is included in the block, the encoding unit performs the arithmetic coding of the number of the atom information included in the block as mentioned above (Step S12).

Then, the encoding unit 12 arranges the atom information included in the block in the descending order of absolute values of coefficients. Next, the encoding unit 12 converts positional information included in the atom information into the intra-block positional information which is relative positional information in the block, and performs the arithmetic coding of the intra-block positional information (Step S13).

Next, the encoding unit 12 performs the arithmetic coding of index information included in the atom information (Step S14).

Then, the encoding unit 12 performs the arithmetic coding of a positive or negative sign of a quantized coefficient included in the atom information, converts the quantized coefficient into a differential quantized coefficient which is a differential value between its absolute value and the above-described minimum absolute value, and performs the arithmetic coding of this differential quantized coefficient (Step S15).

Next, The encoding unit 12 judges whether the coding of all the atom information in the block has been ended (Step S16) and, when having ended, it ends the coding processing of the atom information regarding the block and, on the other hand, when not having ended, it repeats the processing of steps S12 to S16.

The above processing is performed while changing the size of blocks into which a coding target frame is divided, and not only a compression code with a low bit rate is adopted among the compression codes having been coded, but also the size of a block having been adopted is included in a frame header.

Next, a video decoding apparatus 20 according to an embodiment will be explained. Physically, the video decoding apparatus 20 is a computer provided with a CPU (central processing unit), a memory device, and a storage device such as a hard disk. The "computer" here also includes an information personal digital assistant such as a mobile terminal in addition to a normal computer such as a personal computer, and the idea of the present invention is widely applied to apparatuses which can process information.

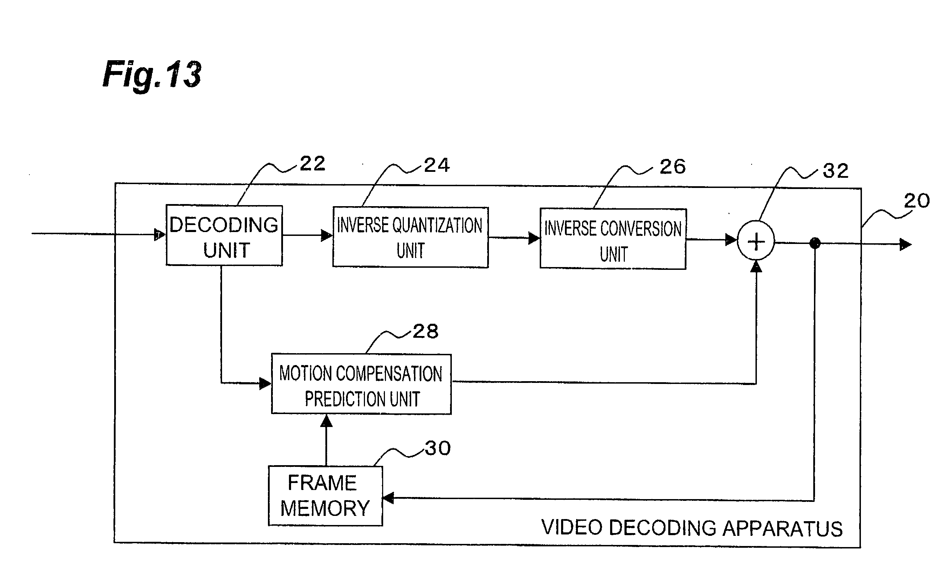

Next, the functional configuration of the video decoding apparatus 20 will be explained. Fig. 13 is a block diagram showing the functional configuration of the video decoding apparatus 20. Functionally, the video decoding apparatus 20 comprises a decoding unit (decoding means) 22, an inverse quantization unit 24, an inverse conversion unit (inverse conversion means) 26, a motion compensation prediction unit (motion compensation prediction means) 28, a frame memory 30 and an addition unit 32.

The decoding unit 22 decodes compression data generated by the video encoding apparatus 1. The decoding unit 22 knows beforehand initial values of the probability table and the update rule of the probability table which has been used by the encoding unit 12 in the video encoding apparatus 1, and can decode the compression data coded by the encoding unit 12.

In addition, the decoding unit 22 adds the minimum absolute value included in the frame header to the differential quantized coefficient obtained by decoding the compression data and, by adding a positive or negative sign to the resultant value, whereby restoring a quantized coefficient.

In addition, the decoding unit 22 converts intra-block positional information into positional information in a decoding target frame while referring to the size of the block included in the frame header. The decoding unit 22 restores the motion vector and the atom information by performing the above processing. The quantized coefficient included in this atom information is converted into a coefficient that is made by inverse quantization by the inverse quantization unit 24.

The inverse conversion unit 26 is provided with the same basis set as that used for the above-mentioned MP method by the video encoding apparatus 1, and generates a prediction residual image of a decoding target frame from the above-mentioned atom information while referring to this basis set. That is, the inverse conversion processing performed by the inverse conversion unit 26 is performed by using positional information, a coefficient and index information to a basis which are included in the atom information. The inverse conversion unit 26 restores, in a position specified by the positional information, a two-dimensional pattern resulted from multiplying a two-dimensional pattern generated with the basis specified by the positional information by the coefficient included in the atom information. A prediction residual image is generated by this inverse conversion processing.

The motion compensation prediction unit 28 generates a predicted image of the decoding target frame by using the motion vector which has been decoded by the decoding unit 22, while referring to a reference frame stored in the frame memory 30.

The frame memory 30 is a temporary memory where a frame having been decoded previously is stored as a reference frame and, as mentioned above, the reference frame referred to by the motion compensation prediction unit 28 is stored.

The addition unit 32 generates the decoding target frame by adding the prediction residual image generated by the inversion unit 26 to the predicted image generated by the motion compensation prediction unit 28.

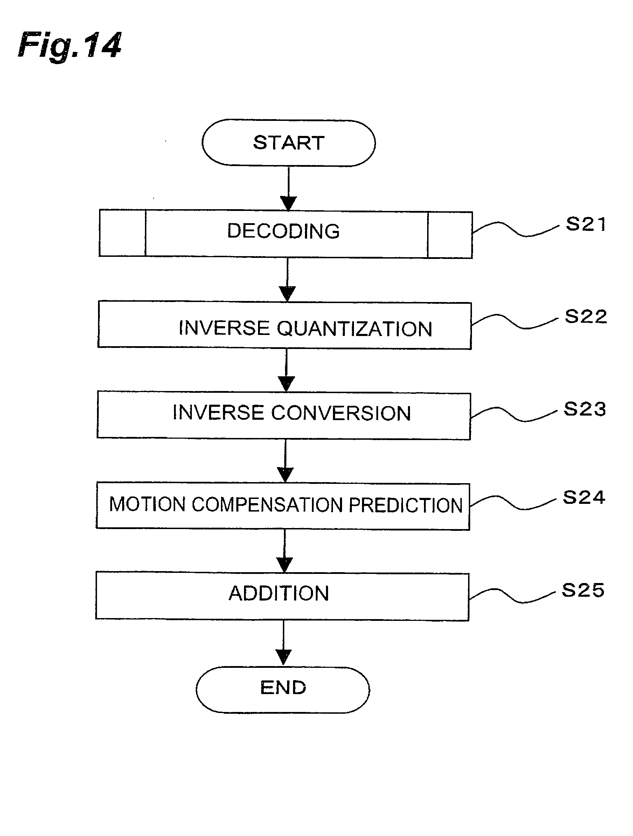

Hereafter, the operation of the video decoding apparatus 20 will be explained, and in addition, a video decoding method according to an embodiment will be explained. Fig. 14 is a flow chart showing this video decoding method.

In the video decoding apparatus 20, the compression data generated by the video encoding apparatus 1 is decoded by the decoding unit 22 as mentioned above, which is made to be the atom information where the positional information and quantized coefficient have been restored (Step S21).

The atom information having been decoded by the decoding unit 22 includes the quantized coefficient in this stage, and the quantized coefficient is converted into a coefficient having been inverse-quantized by the inverse quantization unit 24 (Step S22).

Then, the basis set, same as that used for the above-mentioned MP method by the video encoding apparatus 1, is referred to by the inverse conversion unit 26, and a prediction residual image of the decoding target frame is generated from the atom information (Step S23).

Next, the motion compensation prediction using the motion vector having been decoded by the decoding unit 22 and the reference frame stored in the frame memory 30 is executed by the motion compensation prediction unit 28, whereby a predicted image of the decoding target frame is generated (Step S24).

Then, the prediction residual image and the predicted image are added by the addition unit 32 to generate the decoding target frame (Step S25).

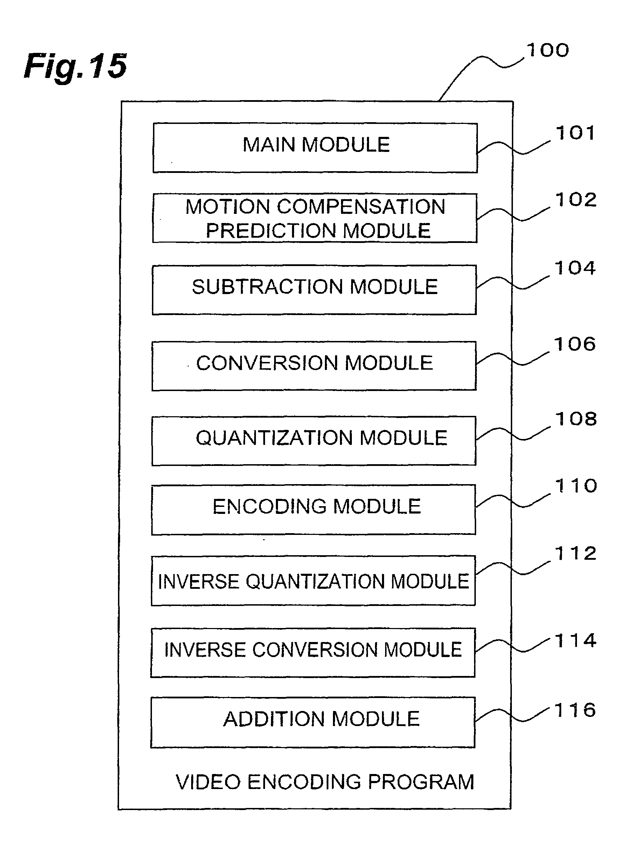

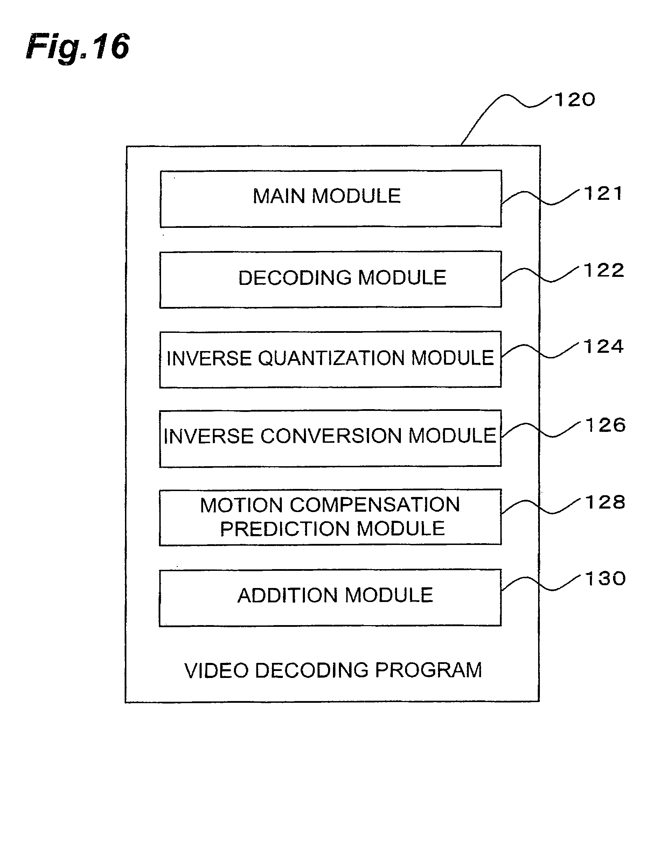

Next, a video encoding program 100 for making a computer function as the video encoding apparatus 1, and a video decoding program 120 for making a computer function as the video decoding apparatus 20 will be explained. Figs. 15 and 16 are diagrams showing the configuration of the video encoding program 100 and the video decoding program 120, respectively.

As shown in Fig. 15, the video encoding program 100 is provided with a main module 101 for controlling processing, a motion compensation prediction module 102, a subtraction module 104, a conversion module 106, a quantization module 108, an encoding module 110, an inverse quantization module 112, an inverse conversion module 114, and an addition module 116. Functions which the motion compensation prediction module 102, subtraction module 104, conversion module 106, quantization module 108, encoding module 110, inverse quantization module 112, inverse conversion module 114 and addition module 116 make a computer execute are the same as those of the above-mentioned motion compensation prediction unit 2, subtraction unit 6, conversion unit 8, quantization unit 10, encoding unit 12, inverse quantization unit 14, inverse conversion unit 16 and addition unit 18, respectively.

In addition, as shown in Fig. 16, the video encoding program 120 is provided with a main module 121 for controlling processing, a decoding module 122, an inverse quantization module 124, an inverse conversion module 126, a motion compensation prediction module 128 and an addition module 130. Functions which the decoding module 122, inverse quantization module 124, inverse conversion module 126, motion compensation prediction module 128 and addition module 130 make a computer achieve are the same as those of the above-mentioned decoding unit 22, inverse quantization unit 24, inverse conversion unit 26, motion compensation prediction unit 28 and addition unit 32, respectively.

Hereafter, actions and advantageous effects of the video encoding apparatus 1 and video decoding apparatus 20 according to this embodiment will be explained. In the video encoding apparatus 1, the conversion unit 8 decomposes the prediction residual image by using the basis set by the two-dimensional function defined by the formulas (1) and (2). The bases based on the two-dimensional function include bases for generating the two-dimensional pattern made by curving the two-dimensional pattern generated by the generating function of the formula (1). Thus, it becomes possible for the conversion unit 8 to decompose a prediction residual image by a small number of repetitive operations on the basis of the MP method using such plurality of bases. As a result, a prediction residual image can be decomposed into a small number of atom information, and thereby it becomes possible to generate compression data with a low bit rate.

Furthermore, the two-dimensional function can include parameters for making the pattern generated by the formulas (1) and (2) move, rotate, and expand and shrink in two directions. By using the basis set by such two-dimensional function, the number of repetitive operations for decomposing a prediction residual image by the MP method can be further reduced. As a result, it becomes possible to further reduce the bit rate of compression data.

Furthermore, by allowing the video decoding apparatus 20 to store the basis set common to the above-described basis set, it becomes possible, in the video decoding apparatus 20, to restore a video from compression data generated by the video encoding apparatus 1. In here, when the video decoding apparatus 20 previously stores the basis set used by the video encoding apparatus 1, the video decoding apparatus 20 can specify, when the video encoding apparatus 1 includes index information generated by decomposing a prediction residual image in the compression data, bases used for restoring the predictive residual image.

Note that the video encoding apparatus 1 can also incorporate parameters used for generating each of the plurality of bases included in the basis set in compression data. In such a case, even when the video decoding apparatus 20 does not store previously the basis set used by the video encoding apparatus 1, the video decoding apparatus 20 can generate, by being given knowledge about the two-dimensional function used by the video encoding apparatus 1, the basis set same as the basis set used by the video encoding apparatus 1 from the parameters included in the compression data.

Up to here, the embodiments of the invention have been explained. However, the invention is not limited to the embodiments, and various variations of the embodiments may be configured. For example, a predetermined two-dimensional function used by the conversion unit 8 is not limited to the function defined by the formulas (1) and (2) of the embodiments. For example, as a generating function of such predetermined two-dimensional function, the following formula (4) may be used instead of the generating function of the formula (2).

$$x'^{2}\sin(x'^{5/3}+y'^{1/2}) \qquad (4)$$

Furthermore, in order to curve a predetermined two-dimensional pattern generated from the formula (4), the following formula (5), for example, is used, and J, K, $\beta$ and $\gamma$ in the formula (5) can be used as curve parameters.

$$x'=Jx^{\beta}+Ky^{\gamma} \tag{5}$$

The principle of the invention is explained in the embodiments described above by using encoding and decoding of a video as an example. However, the principle of the invention is not limited to encoding and decoding of a video, and may be applied to encoding and decoding of a static image being an coding target image.

The principles of the present invention have been illustrated and described in the preferred embodiments, but it is apparent to a person skilled in the art that the present invention can be modified in arrangement and detail without departing from such principles. We, therefore, claim rights to all variations and modifications coming with the spirit and the scope of claims.

**Claims**

1.  An image encoding apparatus comprising:

    dictionary storage means for storing a plurality of bases based on a predetermined two-dimensional function for generating a predetermined two-dimensional pattern, the predetermined two-dimensional function including parameters for curving the predetermined two-dimensional pattern;
    conversion means for decomposing a coding target image by using the plurality of bases on the basis of a predetermined conversion rule, and converting the coding target image into basis information including index information to a basis used for decomposing the coding target image, a coefficient by which the basis specified by the index information is multiplied, and positional information for specifying a position where a pattern made by multiplying the basis specified by the index information by the coefficient is restored; and
    encoding means for generating compression data including a compression code made by encoding the basis information on the basis of a predetermined compression coding rule.

2.  An image encoding method comprising:

    a conversion step in which conversion means decomposes a coding target image on the basis of a predetermined conversion rule by using a plurality of bases stored in dictionary storing means and converts the coding target image into basis information including index information to a basis used for decomposing the coding target image, a coefficient by which the basis specified by the index information is multiplied, and positional information for specifying a position where a pattern made by multiplying the basis specified by the index information by the coefficient is restored, wherein the plurality of bases are based on a predetermined two-dimensional function for generating a predetermined two-dimensional pattern, and the predetermined two-dimensional function includes parameters for curving the predetermined two-dimensional pattern; and
    an encoding step in which encoding means generates compression data including a compression code made by encoding the basis information on the basis of a predetermined compression coding rule.

3.  An image encoding method according to claim 2, wherein the predetermined two-dimensional function further includes parameters for making the predetermined two-dimensional pattern move, rotate, and expand and shrink in two directions.

4.  An image encoding method according to claim 2, wherein the encoding means incorporates the parameters of each of the plurality of bases stored in the dictionary storage means in the compression data.

5.  An image encoding program allowing a computer to function as:

    dictionary storage means for storing a plurality of bases based on a predetermined two-dimensional function for generating a predetermined two-dimensional pattern, the predetermined two-dimensional function including parameters for curving the predetermined two-dimensional pattern;
    conversion means for decomposing a coding target image by using the plurality of bases on the basis of a predetermined conversion rule, and converting the coding target image into basis information including index information to a basis used for decomposing the coding target image, a coefficient by which the basis specified by the index information is multiplied, and positional information for specifying a position where a pattern made by multiplying the basis specified by the index information by the coefficient is restored; and

encoding means for generating compression data including a compression code made by encoding the basis information on the basis of a predetermined compression coding rule.

6. An image decoding apparatus comprising:

dictionary storage means for storing a plurality of bases based on a predetermined two-dimensional function for generating a predetermined two-dimensional pattern, the predetermined two-dimensional function including parameters for curving the predetermined two-dimensional pattern;

decoding means for decoding compression data and generating a basis information, the compression data including a compression code made by encoding the basis information including index information to a basis used for restoring a decoding target image, a coefficient by which the basis specified by the index information is multiplied, and positional information for specifying a position where a pattern made by multiplying the basis specified by the index information by the coefficient is restored; and

inverse conversion means for generating the decoding target image by applying a predetermined inverse conversion rule to the basis information decoded by the decoding means.

7. An image decoding method comprising:

a decoding step in which decoding means decodes compression data including a compression code made by encoding basis information including index information to a basis used for restoring a decoding target image on the basis of a predetermined inverse conversion rule among a plurality of items of index information to a plurality of bases stored in dictionary storage means, a coefficient by which the basis specified by the index information is multiplied, and positional information for specifying a position where a pattern made by multiplying the basis specified by the index information by the coefficient is restored, wherein the plurality of bases are based on a predetermined two-dimensional function which generates a predetermined two-dimensional pattern and includes parameters for curving the two-dimensional pattern; and

an inverse conversion step in which inverse conversion means generates the image for decoding by applying a predetermined inverse conversion rule to the basis information decoded by the decoding means.

8. An image decoding method according to claim 7, wherein the predetermined two-dimensional function further includes parameters for making the predetermined two-dimensional pattern move, rotate, and expand and shrink in two directions.

9. The image decoding method according to claim 7, wherein the decoding means makes the dictionary storing means store the plurality of bases on the basis of parameters for generating each of the plurality of bases included in the compression data.

10. An image decoding program allowing a computer to function as:

dictionary storage means for storing a plurality of bases based on a predetermined two-dimensional function for generating a predetermined two-dimensional pattern, the predetermined two-dimensional function including parameters for curving the predetermined two-dimensional pattern;

decoding means for decoding compression data and generating a basis information, the compression data including a compression code made by encoding the basis information including index information to a basis used for restoring a decoding target image, a coefficient by which the basis specified by the index information is multiplied, and positional information for specifying a position where a pattern made by multiplying the basis specified by the index information by the coefficient is restored; and

inverse conversion means for generating the decoding target image by applying a predetermined inverse conversion rule to the basis information decoded by the decoding means.

# Fig.1

# Fig.2

| ATOM FLAG | CODING VALUE | BINARY VALUE |
|---|---|---|
| WITHOUT ATOM | 0 | 0 |
| WITH ATOM | 1 | 1 |
| BIN NUMBER | | 0 |

# Fig.3

| | | BLOCK SIZE | | |
|---|---|---|---|---|
| | | 4 × 4 | 8 × 8 | 16 × 16 |
| BINARY VALUE | 0 | 0.95 | 0.7 | 0.5 |
| | 1 | 0.05 | 0.3 | 0.5 |

## Fig.4

EP 1 453 004 A2

| | | BLOCK SIZE | | |
|---|---|---|---|---|
| | | 4×4 | 8×8 | 16×16 |
| BINARY VALUE | 0 | 1−16×FAN／FS | 1−64×FAN／FS | 1−256×FAN／FS |
| | 1 | 16×FAN／FS | 64×FAN／FS | 256×FAN／FS |

## *Fig.5*

| ATOM NUMBER | CODING VALUE | BINARY VALUE | | | | | | | |
|---|---|---|---|---|---|---|---|---|---|
| 1 | 0 | 0 | | | | | | | |
| 2 | 1 | 1 | 0 | | | | | | |
| 3 | 2 | 1 | 1 | 0 | | | | | |
| 4 | 3 | 1 | 1 | 1 | 0 | | | | |
| 5 | 4 | 1 | 1 | 1 | 1 | 0 | | | |
| 6 | 5 | 1 | 1 | 1 | 1 | 1 | 0 | | |
| 7 | 6 | 1 | 1 | 1 | 1 | 1 | 1 | 0 | |
| . | . | . | . | . | . | . | . | . | . |
| . | . | . | . | . | . | . | . | . | . |
| BIN NUMBER | | 0 | 1 | 2 | 3 | 4 | 5 | 6 | ·· |

## *Fig.6*

| | | BLOCK SIZE | | |
|---|---|---|---|---|
| | | 4×4 | 8×8 | 16×16 |
| BINARY VALUE | 0 | 0. 95 | 0. 7 | 0. 5 |
| | 1 | 0. 05 | 0. 3 | 0. 5 |

**Fig.7A**

| POSITION | CODING VALUE | BINARY VALUE | |
|---|---|---|---|
| 0 | 0 | 0 | 0 |
| 1 | 1 | 0 | 1 |
| 2 | 2 | 1 | 0 |
| 3 | 3 | 1 | 1 |
| BIN NUMBER | | 0 | 1 |

**Fig.7B**

| POSITION | CODING VALUE | BINARY VALUE | | |
|---|---|---|---|---|
| 0 | 0 | 0 | 0 | 0 |
| 1 | 1 | 0 | 0 | 1 |
| 2 | 2 | 0 | 1 | 0 |
| 3 | 3 | 0 | 1 | 1 |
| 4 | 4 | 1 | 0 | 0 |
| . | . | . | . | . |
| . | . | . | . | . |
| BIN NUMBER | | 0 | 1 | 2 |

**Fig.7C**

| POSITION | CODING VALUE | BINARY VALUE | | | |
|---|---|---|---|---|---|
| 0 | 0 | 0 | 0 | 0 | 0 |
| 1 | 1 | 0 | 0 | 0 | 1 |
| 2 | 2 | 0 | 0 | 1 | 0 |
| 3 | 3 | 0 | 0 | 1 | 1 |
| 4 | 4 | 0 | 1 | 0 | 0 |
| . | . | . | . | . | . |
| . | . | . | . | . | . |
| BIN NUMBER | | 0 | 1 | 2 | 3 |

# Fig.8

| ATOM INDEX | CODING VALUE | BINARY VALUE | | | | | | | |
|:---:|:---:|:---:|:---:|:---:|:---:|:---:|:---:|:---:|:---:|
| 0 | 0 | 0 | | | | | | | |
| 1 | 1 | 1 | 0 | 0 | | | | | |
| 2 | 2 | 1 | 0 | 1 | | | | | |
| 3 | 3 | 1 | 1 | 0 | 0 | 0 | | | |
| 4 | 4 | 1 | 1 | 0 | 0 | 1 | | | |
| · | · | · | · | · | · | · | · | · | · |
| · | · | · | · | · | · | · | · | · | · |
| BIN NUMBER | | 0 | 1 | 2 | 3 | 4 | ·· | ·· | ·· |

# Fig.9

| POSITIVE OR NEGATIVE SIGN OF ATOM COEFFICIENT | CODING VALUE | BINARY VALUE |
|:---:|:---:|:---:|
| POSITIVE SIGN | 0 | 0 |
| NEGATIVE SIGN | 1 | 1 |
| BIN NUMBER | | 0 |

18

# Fig.10

| DIFFERENTIAL VALUE OF ATOM COEFFICIENT | CODING VALUE | BINARY VALUE | | | | | | |
|:---:|:---:|:---:|:---:|:---:|:---:|:---:|:---:|:---:|
| 0 | 0 | 0 | | | | | | |
| 1 | 1 | 1 | 0 | | | | | |
| 2 | 2 | 1 | 1 | 0 | | | | |
| 3 | 3 | 1 | 1 | 1 | 0 | | | |
| 4 | 4 | 1 | 1 | 1 | 1 | 0 | | |
| . | . | . | . | . | . | . | . | . |
| . | . | . | . | . | . | . | . | . |
| BIN NUMBER | 0 | 1 | 2 | 3 | 4 | 5 | 6 | .. |

# Fig.11

```
            ┌─────────────┐
            │    START    │
            └──────┬──────┘
                   │
                   ▼
   ┌──────────────────────────────────┐
   │  MOTION COMPENSATION PREDICTION   │ ⌇ S01
   └──────────────┬───────────────────┘
                  │
                  ▼
   ┌──────────────────────────────────┐
   │      DIFFERENTIAL OPERATION       │ ⌇ S02
   └──────────────┬───────────────────┘
                  │
                  ▼
   ┌──────────────────────────────────┐
   │ CONVERSION OF PREDICTION RESIDUAL IMAGE. │ ⌇ S03
   └──────────────┬───────────────────┘
                  │
                  ▼
   ┌──────────────────────────────────┐
   │           QUANTIZATION            │ ⌇ S04
   └──────────────┬───────────────────┘
                  │
                  ▼
   ┌──────────────────────────────────┐
   │  │    COMPRESSION ENCODING    │   │ ⌇ S05
   └──────────────┬───────────────────┘
                  │
                  ▼
            ┌─────────────┐
            │     END     │
            └─────────────┘
```

*Fig.12*

```
        ┌─────────────────────────┐
        │   START OF ENCODING     │
        │  OF INTER-BLOCK ATOM    │
        └─────────────────────────┘
                    │
                    ▼
        ┌─────────────────────────┐
        │  CODING OF ATOM FLAG    │──── S10
        └─────────────────────────┘
                    │
                    ▼                    S11
              ◇─────────────◇
             ╱               ╲      NO
            ◇ IS ATOM FLAG 1? ◇──────────┐
             ╲               ╱           │
              ◇─────────────◇            │
                    │ YES                │
                    ▼                    │
        ┌─────────────────────────┐      │
        │  CODING OF ATOM NUMBER  │─ S12  │
        └─────────────────────────┘      │
                    │                    │
                    ▼                    │
        ┌───────────────────────────┐    │
        │ CODING OF POSITIONAL INFO │─ S13│
        └───────────────────────────┘    │
                    │                    │
                    ▼                    │
        ┌───────────────────────────┐    │
        │ CODING OF INDEX INFORMATION│─S14 │
        └───────────────────────────┘    │
                    │                    │
                    ▼                    │
        ┌─────────────────────────┐      │
        │ CODING OF COEFFICIENT   │─ S15  │
        └─────────────────────────┘      │
                    │                    │
                    ▼              S16    │
              ◇─────────────◇            │
         NO  ╱   END OF CODING   ╲        │
        ┌───◇ OF ALL ATOMS IN BLOCK? ◇   │
        │    ╲               ╱           │
        │     ◇─────────────◇            │
        │           │ YES                │
        │           ▼◄───────────────────┘
        │  ┌─────────────────────────┐
        │  │     END OF CODING       │
        │  │  OF INTER-BLOCK ATOM    │
        │  └─────────────────────────┘
```

**Fig.13**

DECODING UNIT (22) → INVERSE QUANTIZATION UNIT (24) → INVERSE CONVERSION UNIT (26) → + (32) → (20)

MOTION COMPENSATION PREDICTION UNIT (28)

FRAME MEMORY (30)

VIDEO DECODING APPARATUS

EP 1 453 004 A2

# *Fig.14*

```
        ┌──────────────┐
        │    START     │
        └──────┬───────┘
               │
               ▼
┌─────┬──────────────────────┐
│     │      DECODING        │ ～～ S21
└─────┴──────────────────────┘
               │
               ▼
┌────────────────────────────┐
│    INVERSE QUANTIZATION     │ ～～ S22
└────────────────────────────┘
               │
               ▼
┌────────────────────────────┐
│     INVERSE CONVERSION      │ ～～ S23
└────────────────────────────┘
               │
               ▼
┌────────────────────────────┐
│ MOTION COMPENSATION PREDICTION │ ～～ S24
└────────────────────────────┘
               │
               ▼
┌────────────────────────────┐
│         ADDITION            │ ～～ S25
└────────────────────────────┘
               │
               ▼
        ┌──────────────┐
        │     END      │
        └──────────────┘
```

*Fig.15*

100

| MAIN MODULE | 101 |

| MOTION COMPENSATION PREDICTION MODULE | 102 |

| SUBTRACTION MODULE | 104 |

| CONVERSION MODULE | 106 |

| QUANTIZATION MODULE | 108 |

| ENCODING MODULE | 110 |

| INVERSE QUANTIZATION MODULE | 112 |

| INVERSE CONVERSION MODULE | 114 |

| ADDITION MODULE | 116 |

VIDEO ENCODING PROGRAM

# Fig.16

120

| |
|---|
| MAIN MODULE — 121 |
| DECODING MODULE — 122 |
| INVERSE QUANTIZATION MODULE — 124 |
| INVERSE CONVERSION MODULE — 126 |
| MOTION COMPENSATION PREDICTION MODULE — 128 |
| ADDITION MODULE — 130 |

VIDEO DECODING PROGRAM